# EUROPEAN PATENT SPECIFICATION

(11) **EP 0 494 381 B1**
(45) Date of publication and mention of the grant of the patent: **20.12.1995**
(21) Application number: 91121074.8
(22) Date of filing: 09.12.1991
(51) Int. Cl.: D06N 3/14

(54) **Artificial hide with superior characteristics of absorption of water vapour and of expansibility, and its method of manufacture**
Kunstleder mit verbesserten Eigenschaften bezüglich Wasserdampfabsorption und Expandierbarkeit und Verfahren zu seiner Herstellung
Cuir artificiel ayant des caractéristiques améliorées en matière d'absorption de vapeur d'eau et l'expansibilité et procédé de fabrication

(30) Priority: 04.01.1991 IT GE910001
(43) Date of publication of application: 15.07.1992
(73) Proprietor: Bocciardo, Paolo, I-16034 Portofino (IT)
(72) Inventor: Bocciardo, Paolo, I-16034 Portofino (Genova) (IT); Bocciardo, Sebastiano, I-16034 Portofino (Genova) (IT)
(74) Representative: Porsia, Attilio, Dr.

(56) References cited:
- EP-A- 0 411 236
- FR-A- 470 399
- FR-A- 2 007 927
- FR-A- 2 193 850
- FR-E- 55 835
- CHEMICAL PATENTS INDEX, BASIC ABSTRACTS JOURNAL Section Ch, Week 8748, 3 February 1988 Derwent Publications Ltd., London, GB; Class A, AN 340106
- CHEMICAL ABSTRACTS, vol. 106, no. 12, 23 March 1987, Columbus, Ohio, US; abstract no. 85841E, BEDNARCZYK H.: 'MODIFIED LIQUID POLYURETHANE COMPOSITIONS FOR PRODUCTION OF FOOTWEAR MATERIALS' page 53 ; &&ZESZ. NAUK. - WYSZA SZK. INZ. RADOMIU, MATERIALOZN. CHEM. TECHNOL. OBUWIA 1986 , 9, 131-146
- CHEMICAL ABSTRACTS, vol. 82, no. 16, 21 April 1975, Columbus, Ohio, US; abstract no. 99539K, KADOGAWA TADAO: 'LEATHER SUBSTITUTES' page 87 ; &JP-A-7493501
- CHEMICAL ABSTRACTS, vol. 79, no. 8, 27 August 1973, Columbus, Ohio, US; abstract no. 43372W, KADOGAWA TADAO: 'LEATHER SUBSTITUTES FROM PROTEIN DISPERSIONS' page 38 ; &JP-A-7336303

## Description

The present invention relates to artificial hides.

It is known that tanned natural hides have a high capacity for temporary absorption of water vapour. It is also known that this characteristic of variability of the vapour content of the tanned hides contributes to a decisive extent to that which is defined as the comfort of manufactured articles made of hide, and in particular of footwear made of hide.

It has in fact been discovered that the comfort afforded to the foot of the user by the footwear made of hide does not depend upon the permeability of the hide to water vapour but depends almost exclusively upon the capacity of these materials to absorb water vapour temporarily, with an exothermic reaction, releasing it then gradually to the outside. This effect of absorption of water vapour by the foot and of partial release of the moisture absorbed to the outside gives rise to the comfortable sensation of warmth and freshness transmitted by the footwear made of hide to the foot of the user.

Known synthetic hides, which are obtained for example by means of microcoagulation of solutions of polyurethane, while having optimum permeability to water vapour, have practically no capacity for absorption of water vapour, as a result of which the vapour given out by the foot condenses in the shoe, soaking the foot which therefore experiences the well-known unpleasant sensation of being "soaked" and cold.

The main object of the present invention is therefore to provide an artificial composition having superior characteristics of reversible temporary absorption of water vapour, by means of an exothermic reaction.

It is also known that tanned hides have marked characteristics of expansibility when wet and contraction when dry, such characteristics being completely reversible.

These highly desirable characteristics are almost completely absent in the artificial hides produced currently.

A further object of the present invention is therefore to provide an artificial hide composition having reversible characteristics of expansibility when wet and contraction when dry which come very close to the similar characteristics of tanned natural hides.

A further object of the present invention is to provide an artificial hide which is capable of being subjected to the normal processes of tanning, such as the process of dyeing and tanning in a manner which is completely similar to what takes place for natural hides.

In fact, thus far, artificial hides have had to be dyed by incorporation of suitable colorants and/or pigments into the polymeric starting material, which renders the range of colouring available somewhat limited. Moreover, this type of colouring "in the melt" does not have the characteristics of freshness of colour provided by the conventional colouring of tanned hides.

From Chemical patent index abstract journal, section A, An 87-340106/48; Derwent pub., GB & RO-A-91923 it is known a semi-synthetic shoe-leather substitute containing tanned collagen powder compounded with polyurethane in organic solvent and dye on roughened textile support.

From FR-A-2007927 it is known a process for the manufacture of synthetic plastics materials, and particularly for the manufacture of an artificial hide, comprising the steps of preparation of a spreadable mixture of leather powder with polyurethane with a solvent, spreading that mixture on a support material and microcoagulation of the mixture of polymer and proteic substance applied to support, by removal of the solvent with water.

From FR-A-2193850 a process is known for the production of a mixture of polyurethane charged with proteic substances of animal origin, which mixture may be used for the manufacture of objects by any suitable process of injection, molding, or the like.

From Chemical Abstracts 106, 85841; Columbus, US, a modified liquid polyurethane composition for the production of footwear materials is known, according to which the polyurethane is added with leather shavings, or partially degraded collagen, and the said mixture is used for coating polyester fabric.

From Chemical abstracts 79, 43372; Columbus, US, leather substitutes are known according to which a nonwoven textile or natural leather substrate is immersed in a solution of nitrile rubber lattex containing a tannin solution, is rolled and passed through a suspension of a protein, to give a leather substitute.

From EP-A-470399 not prepublished a process for producing a collagen powder is disclosed, which collagen powder may be added to a polyurethane solution, and the said mixture may be used for the production of a film which may be bonded to a non-woven fabric sheet to obtain an artificial leather.

According to the main characteristic of the present invention, a process for the manufacture of an artificial hide is provided according to which there is formed a dilute solution of polymer, as for instance polyurethane, dissolved in a suitable solvent, such as for example dimethyl formamide, to which a protein in a finely ground state is added, this mixture is amalgamated, and a sheet of non-woven fabric, or similar support, is impregnated with the dispersion obtained. Subsequently, there is formed a second spreadable solution of the same components, which is obtained by using a smaller quantity of solvent and with which solution the previously impregnated sheet of non-woven fabric is spread, after which the microcoagulation of the composite film obtained is carried out, by immersion of the same in water.

Advantageously, the elastic plastic material and the proteic material are present in the composition in a ratio of 1:1 although they can be present in ratios varying within the ranges from 1:4 to 4:1.

Although, for the formation of the artificial hide according to the invention, it is preferable to use, as support, non-woven fabric, given that the characteristics of this material greatly resemble the physical characteristics of hide, it is of course equally possible to use woven fabric.

A further object of the invention is to provide an artificial hide composition with improved characteristics of absorption of water vapour and of expansibility when wet and shortening when dry, comprising an elastic polymeric matrix in which a pea protein isolate or a soya protein isolate is dispersed and/or dissolved.

A further object of the invention is to provide an artificial hide composition with improved characteristics of absorption of water vapour and expansibility when wet and shortening when dry comprising a polyurethane in which zein is dispersed and/or dissolved.

Further objects, characteristics and advantages of the present invention will appear more clearly in the course of the description which follows of some exemplary embodiments of the same.

### EXAMPLE 1

### A) Preparation of a mixture for the impregnation of sheets of non-woven fabric.

There are mixed, cold, 50 ml of a 35% solution of polyurethane in dimethyl formamide, 100 ml of dimethyl formamide and 20 grams of finely ground commercial wheat gluten having a particle size of 150 »m.

### B) Preparation of the mixtures for spreading on sheets of non-woven fabric.

4 spreading mixtures, hereinafter identified respectively as M1, M2, M3 and M4, are prepared by mixing 50 ml of a 35% solution of polyurethane in dimethyl formamide with, respectively, 16, 24, 36 and 50 grams of finely ground commercial wheat gluten (size grading of the gluten 150 »m).

### C) Method of operation.

From a sheet of non-woven fabric of a substance of 23 g/m², four samples of dimensions of 25.5 x 34.5 cm and of a weight of 2 g each are cut. These samples are first impregnated with mixture (A), and are subsequently spread on one side with, respectively, spreading mixtures M1, M2, M3 and M4. The sheets thus spread are subjected to microcoagulation by passing through water, according to the known technique in this procedure. Four samples SM1, SM2, SM3 and SM4 are thus obtained.

### Test of adsoption of moisture on the samples thus obtained.

The samples SM1, SM2, SM3 and SM4 where introduced into a conditioning atmosphere saturated with water vapour (relative humidity of the ambient conditioning air: 95%). The results of the tests carried out are entered in the Table I below.

**TABLE I**

| SAMPLE | DWELL TIME (hours) | % HUMIDITY |
|---|---|---|
| SM1 | 3 | 3.36 |
| SM1 | 24 | 8.10 |
| SM2 | 3 | 4.03 |
| SM2 | 24 | 10.10 |
| SM3 | 3 | 4.29 |
| SM3 | 24 | 10.88 |
| SM4 | 3 | 3.97 |
| SM4 | 24 | 12.25 |
| SM4 | 48 | 17.30 |

By way of comparison, it is pointed out that the absorption values of a natural chrome upper, under the same conditions and after 24 hours'exposure, are of the order of 31%, while the same value for an artificial upper based only on microcoagulated polyurethane on a support made of non-woven fabric are of the order of 3%.

### EXAMPLE 2

The same tests as in Example 1 were repeated, using, however, a composition made of polyurethane/ maize gluten, in which the spreadable composition had the following maize gluten contents:
M5 = 10 grams; M6 = 20 grams and M7 = 30 grams. The samples SM5, SM6 and SM7 are obtained.

The results of these experiments are summarized in Table II below.

**TABLE II**

| SAMPLE | DWELL TIME (hours) | % HUMIDITY |
|---|---|---|
| SM5 | 3 | 1.95 |
| SM5 | 24 | 2.72 |
| SM6 | 3 | 3.15 |
| SM6 | 24 | 8.03 |
| SM7 | 3 | 3.72 |
| SM7 | 24 | 6.98 |

### EXAMPLE 3

### Elongation and shortening test of the synthetic hide compositions in Example I.

The synthetic hide of composition SM2 of Example I was subjected to elongation by hydratation. In Table III below, the values of elongation obtained are entered, in comparison with the corresponding values of a chrome calfskin.

**TABLE III**

| TIME | ELONGATION OF A HIDE | |
|---|---|---|
| | SYNTHETIC ACCORDING TO COMPOSITION SM2 | NATURAL CHROME CALFSKIN |
| 10'' | 10/30 | 16/30 |
| 20'' | 15/30 | 45/30 |
| 30'' | 30/30 | 80/30 |
| 60'' | 60/30 | 115/30 |
| 2' | 80/30 | 120/30 |
| 5' | 86/30 | 130/30 |
| 10' | 99/30 | 133/30 |

In table IV below the corresponding values of shortening are recorded.

**TABLE IV**

| TIME | SHORTENING OF A HIDE | |
|---|---|---|
| | SYNTHETIC ACCORDING TO COMPOSITION SM2 | NATURAL CHROME CALFSKIN |
| 1'' | 0/30 | 0/30 |
| 15'' | 11/30 | 5/30 |
| 21' | 26/30 | 35/30 |
| 25' | 57/30 | 94/30 |
| 30' | 81/30 | 140/30 |

From the examples referred to above, it appears clearly how the synthetic hide according to the invention has a behaviour which is very similar to that of tanned natural hides, as far as both the capacity for absorption of moisture and the capacity for elongation when wet and shortening when dry are concerned.

Although in the examples referred to above wheat gluten and maize gluten are indicated as the proteic components of the synthetic hide according to the invention, it is of course possible to use all those proteic substances which are suitable for the purpose, being compatible with the plastic materials of the matrix. Among these substances, mention can be made of zein, for example, which is a mixture of protein contained in maize gluten, or soya or pea proteins, both pure and in concentrated state in the form of commercial soya flours, containing from 40 to 90% protein in the dry substance.

Among the pea proteins available on the market, mention is made of the protein concentrate known as "pea protein isolate" marketed by COSUCRA S.A., Momalle, Belgium. The said concentrate, which contains 90% of proteins, has an average amino acids composition and content which is very close to the amino acids composition and content of the skin proteins.

Using gluten, it is important that this is of the type known as "vital" or of the rehydratable type.

As stated above, the synthetic hides obtained using the process according to the invention can be subjected to the normal tanning processes, given the reactivity of the amino acids of proteic substances introduced, and they can thus be subjected, for example, to dyeing in a manner which is completely similar to what takes place for natural hides.

Although, in the course of the present description, reference has been made to polyurethane as the plastic material for composition of the matrix of the synthetic hide, it is understood that this indication has no limiting character.

With reference to the solvent for the polyurethane, it is understood that it is possible to use any other solvent which is suitable for the purpose in place of dimethyl formamide.

Summing up, using the process according to the invention, it is possible to obtain an artificial hide which has the following characteristics:
i) particularly high structural strength as a result of a three-dimensionally intertwined fibrous conformation, without interruption;
ii) good deformation under suitable load, free from structural defects such, for example, the so called "orange peel";
iii) good resistance to penetration of water from the external side (so-called "grain side" of natural hide);
iv) marked permeability to water vapour;
v) good absorption of water from the internal side (so-called "flesh side" of a natural hide) so as to absorb the moisture emanating from the foot;
vi) reversible expansibility when wet and contraction when dry so as to adapt the upper to the rhythm of changes in volume of the foot under the influence of transpiration;
vii) softness and flexibility.

The final four characteristics listed above, and in particular those under points (iv) and (vi), constitute the "comfort" which can be explained in the following manner:
The hide in contact with the foot absorbs moisture by means of an exothermic hydratation reaction. Becoming hydratated, the hide increases in surface area by 5-6% and therefore also increases the transpiration which allows the passage of the water in the form of water vapour to the outside.

Evaporation takes away from the system the heat of evaporation, cooling the shoe. This balanced heat-regulating mechanism gives the foot that sensation of well-being which is known by the general term "comfort".

The best materials currently commercially available, while having good transpiration, lack the absorbent phase, as a result of which the sensation on the foot is of cold and wet.

## Claims

1. A method of manufacture of an artificial hide using a composition comprising a proteic substance dispersed and/or dissolved in a polymer, comprising the steps of:
a) mixing of said proteic substance, finely ground, with a dilute solution of polymer in solvent;
b) impregnation of an inert support material with said solution;
c) preparation of a spreadable mixture of polymer and finely ground proteic substance, with low solvent content;
d) spreading of said spreadable mixture on said previously impregnated support material;
e) microcoagulation of the mixture of polymer and proteic substance applied to the support, by removal of the solvent with water.

2. A method according to claim 1, in which said polymer is polyurethane and said solvent is dimethyl formamide.

3. A method according to claim 1, in which said proteic substance is ground to a size grading of the order of 150 »m.

4. A method according to claim 1, in which said impregnation solution comprises:
50 ml of a 35% solution of polyurethane in dimethyl formamide, 100 ml of dimethyl formamide and 10 to 50 grams of proteic substance.

5. A method according to claim 4, in which the proteic substance is preferably present in said solution in amounts of the order of 20 grams.

6. A method according to claim 1, in which said spreadable mixture comprises 50 ml of a 35% solution of polyurethane in dimethyl formamide and 10 to 50 grams of proteic substance.

7. A method according to claim 1, in which said support is non-woven fabric.

8. An artificial hide composition for use in performing the method of Claims 1 to 7, with improved characteristics of absorption of water vapour and of expansibility when wet and shortening when dry, comprising an elastic polymeric matrix in which a pea protein isolate or a soya protein isolate is dispersed and/or dissolved.

9. A composition according to claim 8, in which said polymeric matrix is polyurethane.

10. A composition according to the claims 8 and 9, in which the weight ratio between polymer and proteic substance is comprised between 1:4 and 4:1, and is preferably of the order of 1:1.

11. An artificial hide composition for use in performing the method of Claims 1 to 7, with improved characteristics of absorption of water vapour and of expansibility when wet and shortening when dry, comprising a polyurethane in which zein is dispersed and/or dissolved.

12. A composition according to the claim 11, in which the weight ratio between polymer and zein is comprised between 1:4 and 4:1, and is preferably of the order of 1:1.

## Patentansprüche

1. Herstellungsverfahren für ein Kunstleder, welches eine Zusammensetzung benutzt, die eine in einem Polymer verteilte und/oder aufgelöste Proteisubstanz beinhaltet, und aus folgenden Schritten besteht:
a) Vermischen der besagten feingemahlenen Proteinsubstanz mit einer verdünnten Lösung eines in einem Lösungsmittel befindlichen Polymers;
b) Imprägnierung eines inerten Trägermateriales mit besagter Lösung;
c) Vorbereitung einer streichbaren Mischung eines Polymers und einer feingemahlenen Proteinsubstanz mit wenig Lösungsmittelzugabe;
d) Aufstreichen der besagten streichbaren Mischung auf das vorher imprägnierte Trägermaterial;
e) Mikrogerinnung der auf den Träger aufgebrachten Mischung des Polymers und der Proteinsubstanz durch Entfernen des Lösungsmittels mit Hilfe von Wasser.

2. Verfahren gemäß Anspruch 1, **dadurch gekennzeichnet, daß** das besagte Polymer ein Polyurethan und das Lösungsmittel Dimethylformamid ist.

3. Verfahren gemäß Anspruch 1, **dadurch gekennzeichnet, daß** die Proteinsubstanz auf eine Korngröße in der Größenordnung von 150 » gemahlen ist.

4. Verfahren gemäß Anspruch 1, **dadurch gekennzeichnet, daß** die Imprägnierungslösung beinhaltet: 50 ml einer 35%igen Lösung von Polyurethan in Dimethylformamid, 100 ml Dimethylformamid und 10-50 g Proteinsubstanz.

5. Verfahren gemäß Anspruch 4, **dadurch gekennzeichnet, daß** die Proteinsubstanz vorzugsweise in der Lösung in einer Menge der Größenordnung von 20 g vorhanden ist.

6. Verfahren gemäß Anspruch 1, **dadurch gekennzeichnet, daß** die streichbare Mischung 50 ml einer 35 %igen Lösung von Polyurethan in Dimethylformamid und 10-50 g Proteinsubstanz beinhaltet.

7. Verfahren gemäß Anspruch 1, **dadurch gekennzeichnet, daß** das Trägermaterial ein Nonwovenfabrikat ist.

8. Kunstlederzusammensetzung für die Benutzung bei der Durchführung des Verfahrens gemäß Anspruch 1-7 mit verbesserten Eigenschaften für die Aufnahme von Wasserdampf und der Expandierbarkeit im nassen Zustand und der Schrumpfung im trockenen Zustand, **dadurch gekennzeichnet, daß** sie eine elastische Polymermatrix beinhaltet, in der ein isoliertes Erbsenprotein oder ein isoliertes Sojaprotein verteilt und/oder aufgelöst ist.

9. Zusammensetzung entsprechend Anspruch 8, **dadurch gekennzeichnet, daß** die Polymermatrix ein Polyurethan ist.

10. Zusammensetzung gemäß den Ansprüchen 8 und 9, **dadurch gekennzeichnet, daß** das Gewichtsverhältnis zwischen Polymer und Proteinsubstanz zwischen 1 : 4 und 4 : 1, vorzugsweise im Bereich von 1 : 1 liegt.

11. Kunstlederzusammensetzung für die Benutzung im Verfahren gemäß den Ansprüchen 1 - 7 mit verbesserten Eigenschaften der Absorption von Wasserdampf und der Expandierbarkeit im nassen Zustand und der Schrumpfung im trockenen Zustand, **dadurch gekennzeichnet, daß** sie ein Polyuretan beinhaltet, in dem Zein verteilt und/oder gelöst ist.

12. Zusammensetzung gemäß dem Anspruch 11, **dadurch gekennzeichnet, daß** das Gewichtsverhältnis zwischen Polymer und Zein zwischen 1 : 4 und 4 : 1, vorzugswseise in der Größenordnung von 1 : 1, liegt.

## Revendications

1. Procédé de fabrication d'un cuir artificiel utilisant une composition comprenant une substance protéique dispersée et/ou dissoute dans un polymère, comprenant les étapes qui consistent à :
a) mélanger la substance protéique, finement broyée, à une solution diluée de polymère dans un solvant ;
b) imprégner un matériau de support inerte de la solution précitée ;
c) préparer un mélange, que l'on peut étaler, de polymère et de substance protéique finement broyée, ayant une faible teneur en solvant ;
d) étaler le mélange qui peut l'être sur le matériau de support préalablement imprégné ;
e) réaliser une microcoagulation du mélange de polymère et de substance protéique appliqué au support, par élimination du solvant par de l'eau.

2. Procédé suivant la revendication 1, dans lequel le polymère est le polyuréthane et le solvant le diméthyl formamide.

3. Procédé suivant la revendication 1, dans lequel la substance protéique est broyée à une taille de l'ordre de 150 »m.

4. Procédé suivant la revendication 1, dans lequel la solution servant à imprégner comporte :
50 ml d'une solution à 35 % de polyuréthane dans le diméthyl formamide, 100 ml de diméthyl formamide et 10 à 50 grammes de substance protéique.

5. Procédé suivant la revendication 4, dans lequel la substance protéique est de préférence présente dans la solution en une quantité de l'ordre de 20 grammes.

6. Procédé suivant la revendication 1, dans lequel le mélange que l'on peut étaler comprend 50 ml d'une solution à 35 % de polyuréthane dans le diméthylformamide et 10 à 50 grammes de substance protéique.

7. Procédé suivant la revendication 1, dans lequel le support est un tissu non tissé.

8. Composition de cuir artificiel destinée à être utilisée pour mettre en oeuvre le procédé des revendications 1 à 7, ayant des caractéristiques améliorées d'absorption de la vapeur d'eau et de capacité à s'agrandir lorsqu'elle est humide et à se rétrécir lorsqu'elle est sèche, comprenant une matrice polymére élastique dans laquelle un extrait de protéine de pois ou un extrait de protéine de soja est dispersé et/ou dissous.

9. Composition suivant la revendication 8, dans laquelle la matrice polymére est le polyuréthane.

10. Composition suivant les revendications 8 et 9, dans laquelle le rapport pondéral entre le polymère et la substance protéique est compris entre 1:4 et 4:1, et est de préférence de l'ordre de 1:1.

11. Composition de cuir artificiel destinée à être utilisée pour la mise en oeuvre du procédé des revendications 1 à 7, ayant des caractéristiques améliorées de capacité à absorber l'eau et de capacité à s'agrandir lorsqu'elle est humide et à se rétrécir lorsqu'elle est sèche, comprenant du polyuréthane dans lequel est dispersée et/ou dissoute de la zéine.

12. Composition suivant la revendication 11, dans laquelle le rapport pondéral entre le polymère et la zéine est compris entre 1:4 et 4:1, et est de préférence de l'ordre de 1:1.
